# EUROPEAN PATENT SPECIFICATION

(11) **EP 3 536 476 B1**
(45) Date of publication and mention of the grant of the patent: **14.10.2020**
(21) Application number: 19159775.6
(22) Date of filing: 27.02.2019
(51) Int. Cl.: B29C 44/34, B29C 45/26, B29C 33/00, B29C 39/28

(54) **A MOULDING DEVICE AND A METHOD FOR PRODUCING A FLASHLESS WINDOW SASH OR FRAME**
FORMVORRICHTUNG UND VERFAHREN ZUR HERSTELLUNG EINES GRATLOSEN FENSTERFLÜGELS ODER -RAHMENS
DISPOSITIF DE MOULAGE ET PROCÉDÉ DE PRODUCTION D'UN CHÂSSIS OU D'UN CADRE DE FENÊTRE SANS BAVURE

(30) Priority: 28.02.2018 DK PA201870131
(43) Date of publication of application: 11.09.2019
(73) Proprietor: VKR Holding A/S, 2970 Hørsholm (DK)
(72) Inventor: Meyer-Hansen, Michael, 2970 Hørsholm (DK)
(74) Representative: AWA Denmark A/S

(56) References cited:
- US-A- 4 688 752
- US-A- 4 755 339
- US-A1- 2014 314 901

## Description

### Technical Field

The present invention relates to a mould device adapted for use in a reaction injection moulding machine, in particular for the moulding of flashless parts for windows for buildings, and to a method of moulding flashless parts.

### Background Art

Flash is a thin fin of material formed on a moulded article where, in the particular case of reaction injection moulding, some of the moulding material has been forced through gaps present due to imperfections created on the faces of the moulding parts during manufacture, or through gaps between moulding parts caused by the presence of a substrate placed within the mould and on which the moulding is to be carried out. This moulding material may cure along with the curing of the moulded article, resulting in an undesirable solid protrusion along the side of the moulded element. Such flash is cumbersome in most cases, for example in the case of a moulded element intended for mechanical applications as the flash may result in the part not fitting into its intended location or preventing it from fulfilling its intended function due to imperfect contact between elements. This is the case for window sashes and frames for installation in buildings, where a tight fit between the moving parts is important for smooth operation and reliable and long-lasting insulation of the interior of the building from the outside environment. Flash formation may also hinder or prevent the attachment of sealing elements, hinges, mounting brackets etc. to the sash or frame.

Flash formation may also often result in complications of aesthetic nature, as the moulded article will require additional processing to achieve the intended surface finishing. In the case of moulded window sashes and frames, there is a trend for increasing amounts of said sashes and frames remaining visible in the mounted state, this underlining the need for the avoidance of flash formation when moulding such articles.

Trimming of flash may be carried out using several methods including stripping with a mechanical operator during the moulding process, using rotating knives or disk sanders, or by freezing and subsequent shearing. In any case, the removal of flash from moulded elements is a costly process, as it lengthens the article production time and increases the labour required to obtain a satisfactory final product. Further, the formation of flash may result in considerable waste of material, leading to an additional unnecessary expense causing production costs to increase, especially in the case of large moulded elements.

Efforts to avoid entirely the occurrence of flash in reaction injection moulding have been made. The concept of a "flashless" mould that includes a mould plate with weakened sections, which flex or provide a diaphragm action when the mould is subjected to pressure so as to pinch off the mould cavities where the mould faces come together is well known. US2962761 and US3121918 for instance, both disclose moulds comprising base pieces that will flex under the clamping pressure applied.

In more detail, US3121918 discloses a press plate in conjunction with a deformable mould-supporting diaphragm against which multi-plate, multi-cavity type moulds may be clamped for the moulding of rubber parts. When pressure is applied, the plates can easily flex and conform to the pressure applied by the diaphragm. Plate flexibility permits the diaphragm to close up on gaps so as to compensate for manufacturing tolerances of the moulds and to thereby ensure the application of a uniform damping force to all the mould parts and avoid flash on the moulded element.

US4372740 relates to a moulding apparatus comprising an upper mould and a lower mould, wherein fluid substance is filled below the lower mould thereby making the lower mould floatable on the fluid substance and movable along the lower holding means, thus realising a perfect joint between the upper mould and the lower mould, while compensating for mould production imperfections due to a back pressure of the fluid substance.

US2883704 describes an injection moulding apparatus comprising separable first and second units that are disposed one against the other defining a plurality of cavities, a hollow member in which mouldable material can be confined, and a piston for forcing the mouldable material in the hollow member into the cavities through a sprue plate. Around the bottom edge of said first unit a member presents a flange, which extends inwardly from the wall of the hollow member. The flange has a certain amount of flexibility which permits it to flex under the mould pressures to form a tight seal with the upper surface of the sprue plate. This tight seal, together with the fact that a part of the mouldable material flows over the face of the flange prevents any of the mouldable material from being ejected between the flange and the sprue plate as flash.

US4688752 discloses a reaction injection mould for production of a gasket 17 around a glazing unit 16.

US4755339 discloses an improved window gasket assembly and the apparatus and associated method for reaction injection moulding such assemblies.

WO2010106968 discloses a die for forming a coated article in the mould, wherein seal materials are arranged on the parting surface.

These solutions, however, all beget disadvantages. US3121918, US2883704 and US4372740 are designed for moulding multiple moulded articles simultaneously and the solution disclosed therein is therefore not appropriate for the moulding of single, large flashless product. Both US2962761 and US3121918 include mould plates that provide a diaphragm action when the mould is subjected to pressure, and thus are based on the principle of equalizing pressure across the face of the mould and require pressure distributing means, such as a pressure distributing pad or a capsule / mould-supporting unit and pressure distributing and equalising means, which are additional parts that accumulate wear and shorten the overall lifespan of the injection moulding device.

Additionally, moulding hard-setting materials such as polyurethane for the manufacture of relatively large window frames or sashes requires different considerations from those required for moulding other materials, such as the direct moulding of soft rubber gaskets around glazing units. For example, there is a desire for increasingly large window panes in roof windows, these permitting the passage of light over a greater range of angles. This fact, of course, directly influences the size and the weight of the window sashes and frames that are intended to support such panes. Consequently, moulding devices suitable for reaction injection moulding of such large articles from hard-setting materials must meet both elasticity and longevity requirements.

### Summary of Invention

It is therefore an object of the present invention to provide an alternative mould device with a simple, durable design adapted for use in a reaction injection mould for production of flashless window sashes or frames for use in buildings by processing reaction injection mould-processable material. The invention should be suitable for use in the production of windows having panes with two or more layers of glass.

This and other objects are achieved by an injection mould device according to a first aspect of the invention, and a method of producing flashless window sashes and frames according to a second aspect of the invention.

According to the first aspect of the present invention, there is provided a mould device according to claim 1 for use in a reaction injection mould for production of flashless window sashes or frames by injection of reaction injection mould-processable material, comprising a first mould part, and a second mould part adapted for defining a mould cavity and a parting line with said first mould part, wherein at least one of said mould parts has at least one recess adapted for receiving at least one pressure absorbing insert arranged externally to the mould cavity and adjacent to the parting line of said mould cavity, said insert having at least a proximal edge, which is closest to the moulding device parting line, and a distal edge, which is farthest away from the moulding device parting line, said insert thereby sealing said mould cavity along the parting line, characterized in that the thickness dimension of said pressure absorbing insert is smaller at a parting line distal edge than at a parting line proximal edge, and wherein the at least one pressure absorbing insert comprises a heat-deformable synthetic fluoropolymer, such as polytetrafluoroethylene (PTFE).

By a pressure absorbing insert, it is understood that the pressure transferred by the mould-processable material when being injected into the cavity will be at least partially absorbed by elastic deformation of said insert. By the elastic deformation, the pressure absorbing insert counters the pressure transferred by said injected material. The pressure described will eventually cease, at which point the insert will regain its initial shape ready for a new moulding procedure. In the context of the invention, elastic deformation may typically be of less than 0.5mm, such as 0.1mm or less, such as 0.01mm or less.

Such pressure may occur frequently at the parting lines of the two generally contacting mould parts, at sites where contact is imperfect and gaps may appear between them. Such gaps may be the result of mould part manufacturing imperfections, wear on the mould part faces, or caused by the presence of an object placed within the mould and on which the moulding is to be carried out. While being capable of elastic deformation, the pressure absorbing inserts of the present invention are resistant enough to withstand the pressure applied by the injected material. Thereby, gaps appearing between the two mould part faces are sealed, and the ejection of excess mould-processable material between the faces is avoided.

For the pressure absorbing insert to perform its intended function of absorbing the pressure transferred by the mould-processable material by elastic deformation, it is placed adjacent to the mould parts parting line in the moulding condition, while being external with regards to the mould cavity. By adjacent, it is understood that the pressure absorbing insert is in close proximity of the mould-parts parting line in the moulding condition, the insert thereby sealing the mould cavity along its parting line so as to prevent the formation of flash.

Moreover, due to the placement of the insert in the open recess, replacement of the insert may be made easy. Compared to the solutions proposed in the prior art, where the flash-avoiding system is based on the provision of a fluid suitable for floating support of the mould parts, or where a diaphragm effect is ensured by a difficultly replaceable layer and weakened sections, the operator of the present invention will find it easy to exchange or replace the pressure absorbing inserts if need be. The inventors have realised that by using pressure absorbing inserts of different hardness, consistent flashless results may be obtained when using different mould-processable materials at different mould-processable material injection pressures. Therefore, such a need may arise from the wish to switch the pressure absorbing insert for one with a different hardness so as to achieve a more satisfactory result.

By the pressure absorbing insert thickness dimension being smaller at the distal edge than it is at the proximal edge, the use of screws or other attachment devices on the pressure absorbing insert is facilitated, when these are arranged more distally from the parting line. In this way, attachment devices will not obstruct the transfer of pressure from the moulding part to the pressure absorbing insert when moulding.

By using a synthetic fluoropolymer for the pressure absorbing insert, which is a heat-deformable synthetic fluoropolymer, such as polytetrafluoroethylene (PTFE), the pressure absorbing insert exhibits high strength, toughness and self-lubrication, but also good flexibility and resistance to compression.

All of the above-mentioned points being considered, the formation of flash on the end product at sites corresponding to the moulding parts parting lines may be advantageously reduced.

According to a preferred embodiment, the pressure absorbing insert is heat-expandable within the recess. By the pressure absorbing insert being heat-expandable, the moulding temperature e.g. the temperature within the moulding device in the moulding condition, which is typically higher than resting temperature, will cause the pressure absorbing insert to expand within the mould part recess. The mould part is typically made of a non-deformable, non-compressible solid material, typically steel or other metal alloy. The volumetric, heat-induced expansion of the pressure absorbing insert will be greatest in the direction encountering least resistance. The insert will, therefore, expand through the open face of the recess, projecting the edge of the pressure absorbing insert to come in close proximity of the mould parting line, the insert thereby sealing the mould cavity along its parting line so as to prevent the formation of flash. Thus, by the pressure absorbing insert being heat-expandable, the invention allows for the active sealing of the parting lines of the closed mould parts under increased heat condition, which may ensure a tighter seal than that obtained in the cited prior art documents.

According to one embodiment, the pressure absorbing insert expands into the mould cavity up to 0,5mm when moulding, such as 0,1mm or less, such as 0,01mm.

According to one embodiment, the pressure absorbing insert extends between 0,01 and 0,1mm at 20° Celcius e.g. in mould resting condition, beyond the recess e.g. beyond the recess' open face edge. It should be understood that the mould device of the invention may be positioned in at least two conditions e.g. an open, resting condition, in which the faces of the two mould parts are not in general contact with each other, and a closed, moulding condition, wherein the mould part faces are in general contact with each other and the mould parts are defining a mould cavity and a parting line. By the extension of the pressure absorbing insert beyond the recess in mould resting condition, a pre-moulding tension is established in the pressure absorbing inserts by the deformation caused by contact of two pressure absorbing inserts, each in a recess in opposing moulding parts, or by the contact of one insert with the opposing moulding part surface, when the two moulding parts are moved towards the closed, moulding condition. In the moulding condition, the two mould parts are in close contact with each other. Therefore, the open face of the recess exposes the pressure absorbing insert in one mould part to at least partially contact either the face of the second mould part or a second pressure absorbing insert present in the recess of the second mould part, in the moulding condition. Thus, in the moulding condition, the at least one pressure absorbing insert will be under pressure from all its sides. The established pretension will ensure that any gaps between the mould faces along the parting line will be tightly sealed by the expansion of the heat-expandable pressure absorbing insert as described herein above.

According to an embodiment, the pressure absorbing insert has a Shore D hardness between 58-65. Experimental results have determined that hardness within this range may contribute to a pressure absorbing insert offering good resistance to the pressure applied by the injected material. Alternative hardness providing this effect is in the Shore A hardness range from 40 to 80. Preferably, the pressure absorbing insert comprises at least one part with a Shore A hardness comprised between 55 and 65, such as 64.

Furthermore, hardness within the mentioned ranges may ensure greater durability, due to increased flexibility and resistance to compression. Notwithstanding the pressure absorbing insert being made of a material of sufficient hardness, it should also be elastically deformable to a sufficient degree so as to fulfil its intended function in recovering its initial shape once the moulded part is removed from the moulding device, and after countering the pressure transferred by the moulding material upon injection. Thus, the pressure absorbing insert is typically made of a heat-deformable plastic polymer, such as thermoplastic, or polysiloxanes, such as silicone or fluorosilicone.

According to embodiments, the pressure absorbing insert may comprise two parts, each comprising one polymer. Thus, according to some embodiments, one part of the pressure absorbing insert may comprise a polysiloxane polymer, while a second part comprises PTFE. Accordingly, in one embodiment, the pressure absorbing insert comprises one part comprising silicone and another part comprising PTFE. In another embodiment the pressure absorbing insert comprises one part comprising fluorosilicone and another part comprising PTFE. According to another such embodiment comprising two parts, one part of the pressure absorbing insert comprises one polysiloxane while the orther part comprises another polysiloxane. Accordingly, in one embodiment the pressure absorbing insert comprises one part comprising silicone and another part comprising fluorosilicone.

Alternatively, the pressure absorbing insert is built of one part, comprising a compound of both one or more polysiloxanes and PTFE. For example, the pressure absorbing insert may comprise a compound made of fluorosilicone and PTFE, of silicone and fluorosilicone, or of silicone and PTFE.

Parts comprising fluorosilicone confer increased flexibility and resistance to compression, resistance to aging and sunlight, increased resistance to oils, fuels, aromatic and chlorinated solvents, and to diluted alkalies, diester oils, aliphatic and aromatic fluorocarbons, silicone oil, toluene, benzene, ozone and oxidative environments.

According to one embodiment, the pressure absorbing insert is an integral part of the mould part. As an intergral part, it is understood that the pressure absorbing insert is permanently fixed to the sides and/or the base of the recess. Permanent fixation results in an arrangement that is more precise, as movement of the pressure absorbing insert within the recess is reduced. The benefits that come with a more adjustable arrangement may, however, be desired.

According to an embodiment, the pressure absorbing insert is detachably attached to said at least one moulding part. Detachability of the pressure absorbing insert in the open face recess ensures that replacement of the insert may be made easy. Need to replace the pressure absorbing insert may arise according to what is described herein above.

The pressure absorbing insert may be adjustable within the recess. In such a case, the recess and the pressure absorbing insert will have shapes and sizes adapted to allow for adjustability of the pressure absorbing insert within the recess. A pressure absorbing insert has a length dimension, a width dimension and a thickness dimension. Said length dimension is essentially parallel to the parting line in the moulding condition, said width dimension is perpendicular to said length dimension and extends in the same plane as the length dimension, and said thickness dimension is perpendicular to both said length and said width dimensions.

According to an embodiment, the pressure absorbing insert may be placed in a variety of positions along a first axis x essentially parallel to the length dimension of the insert. According to another embodiment, the pressure absorbing insert is adjustable within the recess along the axis x essentially parallel to the parting line.

According to another embodiment, the pressure absorbing insert may be placed in a variety of positions along a second axis y essentially parallel to the width dimension of the insert.

According to another embodiment, the pressure absorbing insert may be placed in a variety of positions along a third axis z essentially parallel to the thickness dimension of the insert.

Adjustability may be achieved, for example, by the use of one or several wedges placed in the recess so as to force the pressure absorbing insert along the axis or axes desired. The wedge can be made of metal, such as aluminium or steel.

In one embodiment, the wedge has at least one slanted side. For example, the wedge may be wider on the surface facing the opposing moulding part than on the surface in contact with the bottom face of the recess, this resulting in a wedge. In such a case, the side face of the recess that is in contact with the slanted side of the wedge may be inversely slanted to receive the wedge side. By tightening attachment means such as screws, the wedge will be pressed deeper into the mould part recess, and because of the slanted side, the wedge will push on the slanted recess wall and on the pressure absorbing insert and cause the latter to be displaced laterally, in direction of the parting line. Because of abutment against the parting line proximal side face of the recess, the pressure absorbing insert will provide increased pretension at the parting line when the moulding device transitions from the open condition to the closed, moulding condition.

Such adjustability permits, for example, an optimal placement of the pressure absorbing insert within the recess and/or with respect to the parting line defined by the two mould parts in the moulding condition.

According to an embodiment, mould parts may be tapered away from said first and second contact faces and the parting line in the moulding condition. In this way, said mould parts form angles with the plane defined by the pressure absorbing insert length and the width dimensions in the closed, moulding condition. This allows the mould parts to better apply pressure to the pressure absorbing insert and to better allow for the use of screws or other attachment devices as described herein above.

According to an embodiment, moulding parts are adapted for use with an injection pressure applied to the reaction injection moulding processable material during injection below 14bar.

All of the above-mentioned points being considered, the formation of flash on the end product at sites corresponding to the moulding parts parting lines may be advantageously reduced according to the present invention.

In another second aspect of the invention, a method of producing a flashless window sash or frame according to claim 10 is provided.

In a preferred embodiment of this second aspect, the injection pressure applied to the reaction injection moulding processable material during injection is below 14bar. By limiting the injection pressure applied to the moulding processable material, the pressure transferred to the mould parts parting line is less compared to traditional injection moulding, thus leading to a reduction in frequency and amount of flash forming on the moulded article.

An injection pressure below 14bar will also reduce the pressure absorbing insert hardness requirement at sites prone to flash formation in the context of the invention. The thermal expansion coefficient of common solid materials is inversely proportional to their melting point. Thus, a pressure absorbing insert with a low melting point has a greater thermal expansion coefficient than that of an insert made of a material with a high melting point, and greater thermal expansion will result in tighter sealing of the mould parts along the parting line as described above. Injection pressure below 14bar may thus result in reduced flash formation on the moulded article compared to injection at higher pressures.

Further presently preferred embodiments and further advantages will be apparent from the following detailed description and the appended dependent claims.

### Brief Description of Drawings

The above, as well as additional objects, features and advantages of the present inventive concept, will be better understood through the following illustrative and detailed description, with reference to the appended drawings. In the drawings like reference numerals will be used for like elements unless stated otherwise.
Fig. 1a shows a perspective view of the moulding device in an embodiment of the invention in a closed condition.
Fig. 1b shows a perspective view of both moulding parts in the moulding device in an open condition in an embodiment of the invention.
Fig. 2a shows a perspective view of a first moulding part in an embodiment of the moulding device according to the invention.
Fig.2b shows a perspective view of a first moulding part containing a moulded element in an embodiment of the invention.
Fig. 3a shows a perspective partial view of a first moulding part in an embodiment of the invention.
Fig. 3b shows another perspective partial view of a first moulding part in an embodiment of the invention.
Fig. 4a shows a perspective view of a heat-deformable pressure absorbing insert according to an embodiment of the invention.
Fig. 4b shows a perspective view of another heat-deformable pressure absorbing insert according to an embodiment of the invention.
Fig. 4c shows a section of a mould device in a closed condition in an embodiment according to the invention.
Fig. 5 shows a cross section of a mould device including a wedge in an embodiment according to the invention.

### Description of Embodiments

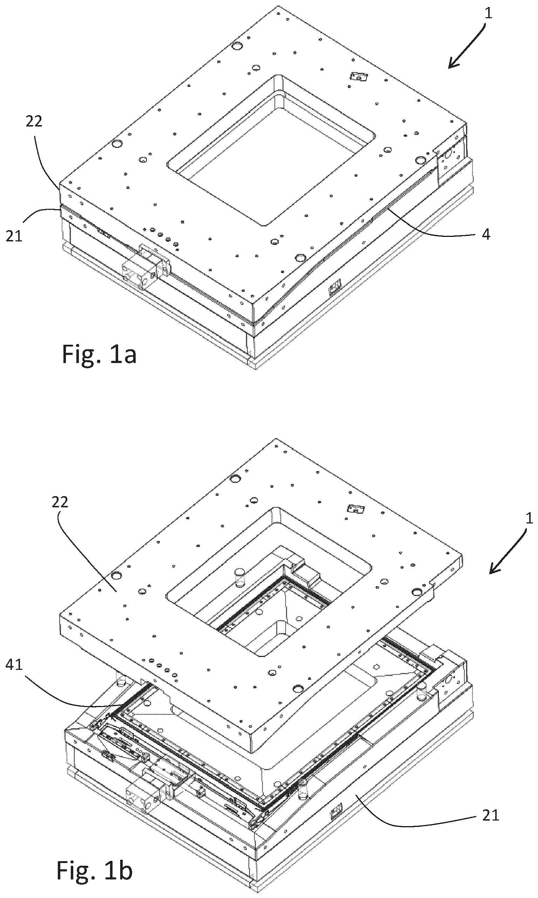

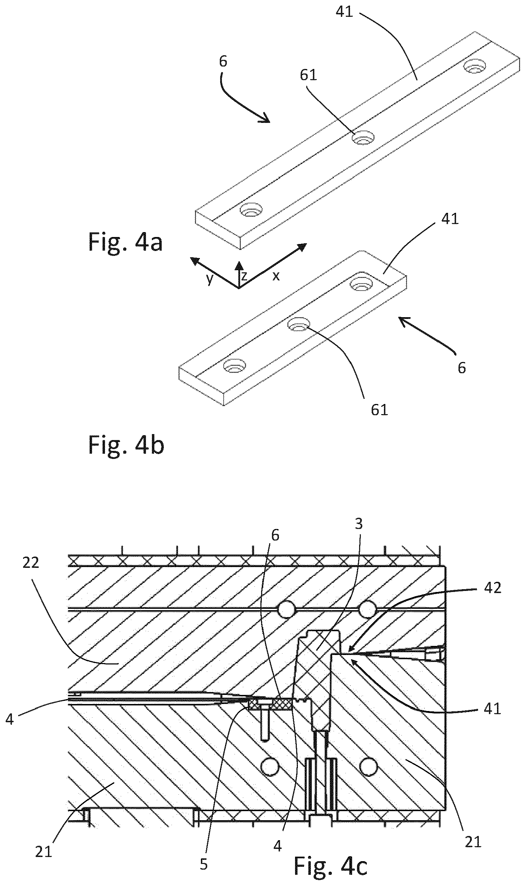

Referring first to Figs. 1a-2b showing the overall appearance and principles underlying a mould device 1 according to the invention, the mould device comprises two mould parts 21, 22. As seen in Figs. 1b and 4c, each mould part has a contact face 41, 42 arranged to contact the other mould part in the moulding condition. The mould parts are typically made of a non-deformable, non-compressible solid material, typically steel or other metal alloy and are further adapted for defining a mould cavity 3 with each other in the closed, moulding condition. Around the edges of the contact faces and the mould cavity, a parting line 4 (Fig. 1a and 4c) is defined by the mould parts when in the moulding condition.

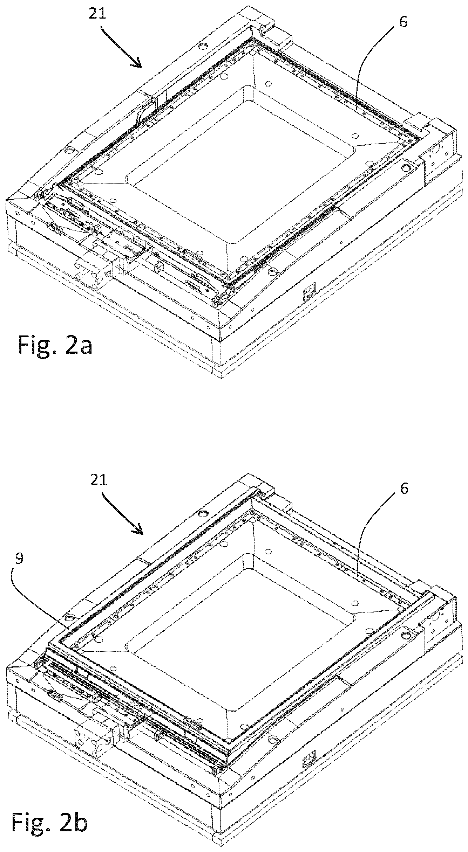

The moulding device of the present invention is intended primarily for moulding window frames and sashes, which are most commonly shaped by two pairs of opposing frame members, such that the sash or frame is made up of four elongated elements and is substantially rectangular, not shown in detail. Elongated frame elements may be moulded individually for posterior assembly to form a completed frame or sash. Window sashes or frames are otherwise moulded as one essentially rectangular part, thereby simplifying manufacture and thus reducing production time and costs. Thus, the moulding parts 21, 22 and the mould cavity 3 are adapted to mould an essentially rectangular moulded part e.g. a window sash or frame 9, fig. 2b.

The moulding device according to the present invention is adapted for manufacturing of a window sash or frame by a reaction injection moulding process using a polymer, for example, polyurethane (PU), such as thermoplastic polyurethane or non-isocyanate based polyurethane (NIPU), but may also be made of or contain polyurea, polyisocyanurate, polyester, polyphenol, polyepoxide, or nylon 6. It is generally known to the skilled person that two parts of the polymer are mixed together. In the case of polyurethane, one component of the mixture is polyisocyanate and the other component is a blend of polyol, surfactant, catalyst, and blowing agent.

Such a reaction injection mould-processable material is heated and in some cases may be injected in fluid form through a sprue, which is arranged in any adequate position. It is also generally known to the person skilled in the art how to arrange such a sprue on a reaction injection moulding device for the injection of reaction injection moulding processable material.

For the mould cavity to be entirely filled with said material and that the moulded part acquires the intended volume and shape, it may be required to allow the material to cure and harden. Injection pressure in the context of the present invention is typically maintained under 10.5bar, preferably between 3bar and 10bar.

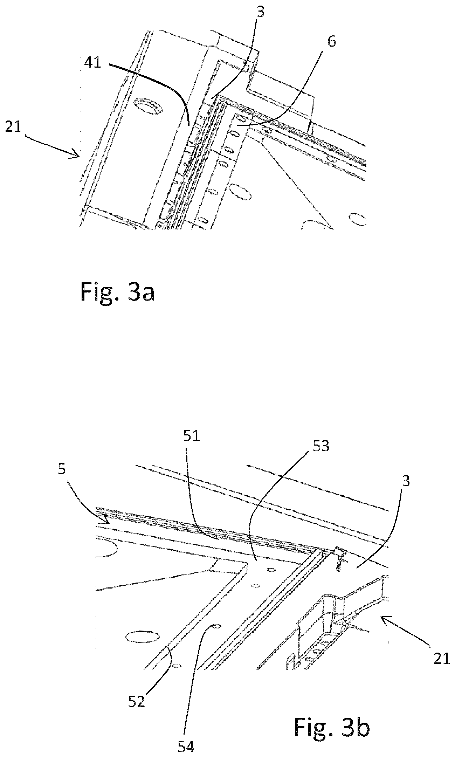

Referring now to Figs. 2b and 3a-b, to ensure that the mould cavity is properly sealed, thus avoiding the formation of flash on the moulded part, at least one of the mould parts 21, 22 of the present invention has a recess 5 adapted for receiving at least one pressure absorbing insert 6. In all embodiments described herein comprising a pressure absorbing insert, the first contact face 41 is thus found on the pressure absorbing insert 6 (see Figs. 4a & 4b).

The recess 5 has at least two side faces 51, 52 and a bottom face 53 and defines an open face, through which the pressure absorbing insert is exposed in the open, resting condition, when present.

In this embodiment, the bottom face of the recess also comprises threaded holes 54 for receiving screws used to attach the pressure absorbing insert 6. Other attachment means may also be adequate, such as rivets, plugs, studs or similar.

Referring now to Fig. 4c, the recess 5 is arranged in the mould part separately from, but adjacent to the mould cavity, in such a way that at least one edge of the pressure absorbing insert 6 sits in close contact to the mould part parting line 4 in the moulding condition. The recess 5 is further arranged to receive the pressure absorbing insert 6 in such a way that the pressure absorbing insert fits tightly into the recess, the recess thus appropriately securing the pressure absorbing insert (Fig. 3a). The recess is further arranged so that the pressure absorbing insert extends slightly beyond the open face edges of the recess 5. The pressure absorbing insert extends between 0,01 and 0,1mm at 20° Celsius e.g. in mould resting condition, beyond the recess e.g. beyond the recess' open face edge, thereby presenting a pre-moulding tension when transitioning the moulding parts 21, 22 from an open condition to a closed, moulding condition.

Referring now to Figs. 4a-b, the pressure absorbing insert 6 may have any shape or size in the context of this invention. It is, however, preferred that the pressure absorbing insert has a thickness that is consistent with the examples presented herein and allowing for an adequate heat-induced expansion, thus, the pressure absorbing insert has a thickness within the range of a few millimetres to 5cm. Length of the pressure absorbing insert is chosen so to provide adequate sealing of gaps between the mould parts. The pressure absorbing inserts may be of any width that is adequate to ensure its correct functionality, but is preferably wide enough to accommodate holes 61 adapted to receive screws or similar devices appropriate for attaching the pressure absorbing insert 6 to the mould part 5.

The pressure absorbing insert may have a rectangular cross-section. In any case, the size and shape of the pressure absorbing insert will be chosen so as to allow adequate permanent or detachable attachment and retention within the open recess.

The pressure absorbing insert thickness dimension is smaller at the edge that is distal to the parting line in the moulding condition than it is at edge that is proximal to the parting line in the moulding condition, along axis y. This allows for the use of screws or other attachment devices on the pressure absorbing insert arranged more distally from the parting line, so as not to obstruct the transfer of pressure from the moulding part to the pressure absorbing insert when moulding.

As shown in Fig. 4c, mould parts 21, 22 are tapered away from first and second contact faces 41, 42 and parting line 4 in the moulding condition. Adequate materials of which the pressure absorbing insert may be constructed include, heat-deformable plastic polymer, such as thermoplastic, or polysiloxane, such as silicone, and heat-deformable synthetic fluoropolymer, such as polytetrafluoroethylene (PTFE).

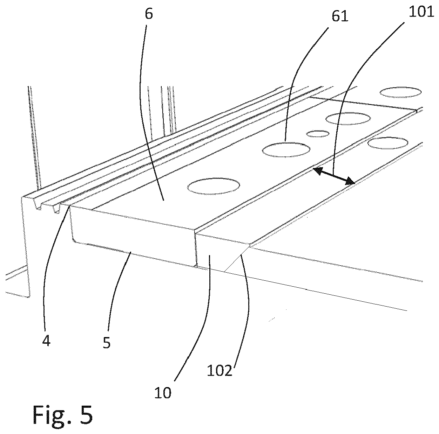

In the embodiment shown in Fig. 5, wedge 10 fills space 101 between the pressure absorbing insert 6 and the recess side wall 52. The slanted side of the wedge 102 is in contact with a correspondingly slanted recess side wall 52, which enables tightening of the wedge to exert sideward pressure on pressure absorbing insert 6 in direction of parting line 4.

As mentioned above, the second aspect of the invention relates to a method according to claim 10 of producing a flashless window sash or frame, the method comprising the steps of providing a moulding device adapted for use in a reaction in-jection moulding device according to any one of claims 1 to 9 comprising:
two mould parts,
at least one pressure absorbing insert in at least one recess in at least one of said two mould parts, joining said two mould parts thereby defining a parting line and a mould cavity in such a manner that said pres-sure absorbing insert (6) is externally adjacent to said mould cavity at a parting line, and
injecting reaction injection mould-processable material into the mould cavity.

The person skilled in the art will understand that the two mould parts or any other moving parts of the mould must be moved in the correct order to correctly interact, guide interlock, open and close. For example, the two mould parts 21, 22 need to interact to define the mould cavity 3 and the parting line 4 in a way adequate to obtain the intended flashless moulded element 9 by implementing the method described herein above.

Further, the number and placement of pressure absorbing inserts 6 used in the method may vary, and freely decided upon by the user. The use of pressure absorbing inserts may only be necessary for the moulding of certain window frames or sashes sizes and types. Thus, the first window sash or frame may exhibit flash, whereafter pressure absorbing inserts 6 may be inserted and secured in the recess 5 so as to counter the force transferred by the injected fluid thereby allowing the production of flashless moulded elements 9.

By joining the two mould parts 21, 22 and as shown in Figs. 1a and 4c, the pressure absorbing insert is externally adjacent to said mould cavity 3. It will be understood by the user that adjustment of the pressure absorbing insert position will be advantageous when this feature is present. Correct positioning of the pressure absorbing insert 6 will ensure that its parting-line proximal edge will be adjacent to the mould cavity 3 in the moulding condition as described herein above. It will also be readily apparent, that several rounds of joining said mould parts 21, 22 so as to form a mould cavity 3 and a parting line 4, injection of reaction mould-processable material into the mould cavity, inspection of the moulded element 9 and adjustment of the pressure absorbing insert position, may be required for achieving optimal results. To this end, the method may also comprise exchanging pressure absorbing inserts of different hardness.

Furthermore, the method may comprise further processing the injected reaction mould material. Reaction injection moulding often necessitates processing of the injected material for it to harden. Commonly known processes include, introducing a curing step at the end of the method.

### List of reference numerals

- 1: moulding device
- 2: mould parts
- 21: first mould part
- 22: second mould part
- 3: mould cavity
- 4: parting line
- 41: first contact face
- 42: second contact face
- 5: recess
- 51: first side face
- 52: second side face
- 53: bottom face
- 54: threaded hole
- 6: pressure absorbing insert
- 9: window sash / frame
- 10: wedge
101 space
102 wedge slanted side

## Claims

1. A moulding device (1) adapted for use in a reaction injection mould for production of a flashless window sash or frame (9) for a building by processing reaction injection mould-processable material, comprising a first mould part (21), and a second mould part (22) adapted for defining a mould cavity (3) and a parting line (4) with said first mould part (21), wherein at least one of said mould parts (21, 22) has at least one recess (5) adapted for receiving at least one pressure absorbing insert (6) arranged externally to the mould cavity (3) and adjacent to the parting line (4), said insert (6) having at least a proximal edge, which is closest to the moulding device parting line, and a distal edge, which is farthest away from the moulding device parting line, said insert thereby sealing said mould cavity along the parting line, **characterised in that** the thickness dimension of said pressure absorbing insert (6) is smaller at a parting line distal edge than at a parting line proximal edge, and wherein the at least one pressure absorbing insert (6) comprises a heat-deformable synthetic fluoropolymer, such as polytetrafluoroethylene (PTFE).

2. The moulding device according to claim 1, wherein the proximal edge of the at least one pressure absorbing insert (6) is adapted for expanding into the mould cavity (3) up to 0,5mm by effect of increasing temperature when moulding.

3. The moulding device according to any one of the preceding claims, wherein said pressure absorbing insert (6) extends between 0,01 and 0,1mm at 20° Celsius beyond the at least one recess (5) such that a pre-moulding tension is established when transitioning the moulding parts (21, 22) from an open condition to a closed, moulding condition.

4. The moulding device according to any one of the preceding claims, wherein the at least one pressure absorbing insert (6) has a Shore D hardness in the range of 58 to 65 or a Shore A hardness in the range of 40 to 80.

5. The moulding device according to any one of the preceding claims, wherein said at least one pressure absorbing insert (6) is integral to at least one mould part (21, 22).

6. The moulding device according to any one of claims 1 to 4, wherein said at least one pressure absorbing insert (6) is detachably attached to said at least one mould part.

7. The moulding device according to any one of the preceding claims, wherein said at least one pressure absorbing insert (6) is adjustable within the recess (5) along at least one of an axis x essentially parallel to a length dimension of said pressure absorbing insert, an axis y essentially parallel to a width dimension of said pressure absorbing insert, an axis z essentially parallel to a thickness dimension of said pressure absorbing insert.

8. The moulding device according to claim 7, wherein a wedge (10) is placed alongside the pressure absorbing insert (6) within the recess (5).

9. The moulding device according to any one of the preceding claims, wherein said moulding device (1) is adapted to mould at an injection pressure of below 14 bar.

10. A method for producing a flashless window sash or frame, the method comprising:
providing a moulding device (1) adapted for use in a reaction injection moulding device according to any one of claims 1 to 9 comprising:
two mould parts (21, 22),
at least one pressure absorbing insert (6) in at least one recess (5) in at least one of said two mould parts (21, 22),
joining said two mould parts (21, 22) thereby defining a parting line (4) and a mould cavity (3) in such a manner that said pressure absorbing insert (6) is externally adjacent to said mould cavity at a parting line, and
injecting reaction injection mould-processable material into the mould cavity.

11. The method according to claim 10, comprising the additional step of placing at least one wedge in the recess (5) for forcing the pressure absorbing insert along one or more axes x,y,z.

12. The method according to claim 11, wherein the wedge has at least one slanted side.

13. The method according to any one of claims 10 to 12, wherein the injection pressure applied to the reaction injection moulding processable material during injection is below 14 bar.

## Patentansprüche

1. Formvorrichtung (1), die zur Verwendung in einer Niederdruckspritzform zur Herstellung eines abdeckblechfreien Fensterflügels oder -rahmens (9) für ein Gebäude durch Verarbeiten eines niederdruckspritzgießfähigen Materials eingerichtet ist, einen ersten Formteil (21) und einen zweiten Formteil (22), der dazu eingerichtet ist, einen Formhohlraum (3) und eine Trennlinie (4) zum ersten Formteil (21) zu definieren, umfassend, wobei mindestens eines der Formteile (21, 22) mindestens eine Aussparung (5) aufweist, die zur Aufnahme mindestens eines druckabsorbierenden Einsatzes (6), der außerhalb des Formhohlraums (3) und an die Trennlinie (4) angrenzend angeordnet ist, eingerichtet ist, wobei der Einsatz (6) mindestens eine proximale Kante, die am nächsten an der Trennlinie der Formvorrichtung liegt, und eine distale Kante, die von der Trennlinie der Formvorrichtung am weitesten entfernt ist, aufweist, wobei der Einsatz dadurch den Formhohlraum entlang der Trennlinie abdichtet, **dadurch gekennzeichnet, dass**
die Stärkenabmessung des druckabsorbierenden Einsatzes (6) an der distalen Kante der Trennlinie kleiner als an der proximalen Kante der Trennlinie ist und wobei der mindestens eine druckabsorbierende Einsatz (6) ein wärmeumformbares synthetisches Fluorpolymer, zum Beispiel Polytetrafluorethylen (PTFE) umfasst.

2. Formvorrichtung nach Anspruch 1, wobei die proximale Kante des mindestens einen druckabsorbierenden Einsatzes (6) durch Einwirkung einer erhöhten Temperatur beim Formen zur Ausdehnung von bis zu 0,5 mm in den Formhohlraum (3) eingerichtet ist.

3. Formvorrichtung nach einem der vorstehenden Ansprüche, wobei sich der druckabsorbierende Einsatz (6) bei 20° Celsius zwischen 0,01 und mm über die mindestens eine Aussparung (5) hinaus erstreckt, sodass eine Vorformungsspannung aufgebaut wird, wenn die Formteile (21, 22) von einem geöffneten Zustand in einen geschlossenen Formungszustand übergehen.

4. Formvorrichtung nach einem der vorstehenden Ansprüche, wobei der mindestens eine druckabsorbierende Einsatz (6) eine Shore-D-Härte im Bereich von 58 bis 65 oder eine Shore-A-Härte im Bereich von 40 bis 80 aufweist.

5. Formvorrichtung nach einem der vorstehenden Ansprüche, wobei der mindestens eine druckabsorbierende Einsatz (6) in mindestens ein Formteil (21, 22) integriert ist.

6. Formvorrichtung nach einem der Ansprüche 1 bis 4, wobei der mindestens eine druckabsorbierende Einsatz (6) lösbar an dem mindestens einen Formteil befestigt ist.

7. Formvorrichtung nach einem der vorstehenden Ansprüche, wobei der mindestens eine druckabsorbierende Einsatz (6) innerhalb der Aussparung (5) entlang einer X-Achse im Wesentlichen parallel zu einer Längenabmessung des druckabsorbierenden Einsatzes, einer Y-Achse im Wesentlichen parallel zu einer Breitenabmessung des druckabsorbierenden Einsatzes und/oder einer Z-Achse im Wesentlichen parallel zu einer Stärkenabmessung des druckabsorbierenden Einsatzes einstellbar ist.

8. Formvorrichtung nach Anspruch 7, wobei ein Keil (10) entlang des druckabsorbierenden Einsatzes (6) innerhalb der Aussparung (5) angeordnet ist.

9. Formvorrichtung nach einem der vorstehenden Ansprüche, wobei die Formvorrichtung (1) dazu eingerichtet ist, bei einem Einspritzdruck von weniger als 14 bar zu formen.

10. Verfahren zur Herstellung eines abdeckblechfreien Fensterflügels oder -rahmens, wobei das Verfahren Folgendes umfasst:
Vorsehen einer Formvorrichtung (1), die zur Verwendung in einer Niederdruckspritzgießvorrichtung nach einem der Ansprüche 1 bis 9 eingerichtet ist, Folgendes umfassend:
zwei Formteile (21, 22),
mindestens einen druckabsorbierenden Einsatz (6) in mindestens einer Aussparung (5) in mindestens einem der zwei Formteile (21, 22),
Verbinden der zwei Formteile (21, 22), dadurch Definieren einer Trennlinie (4) und eines Formhohlraums (3) derart, dass der druckabsorbierende Einsatz (6) außerhalb an einer Trennlinie an den Formhohlraum angrenzt, und
Einspritzen eines niederdruckspritzgießfähigen Materials in den Formhohlraum.

11. Verfahren nach Anspruch 10, den zusätzlichen Schritt des Anordnens mindestens eines Keils in der Aussparung (5), um den druckabsorbierenden Einsatz entlang einer oder mehrerer der X-, Y- und Z-Achse zu drücken, umfassend.

12. Verfahren nach Anspruch 11, wobei der Keil mindestens eine geneigte Seite aufweist.

13. Verfahren nach einem der Ansprüche 10 bis 12, wobei der bei der Einspritzung auf das niederdruckspritzfähige Material aufgebrachte Einspritzdruck weniger als 14 bar beträgt.

## Revendications

1. Dispositif de moulage (1) conçu pour être utilisé dans un moule à injection et réaction pour la production d'un châssis ou d'un cadre de fenêtre sans bavure (9) pour un bâtiment en traitant un matériau pouvant être traité par un moule à injection et réaction, comprenant une première partie de moule (21), et une seconde partie de moule (22) conçue pour définir une cavité de moule (3) et un plan de joint (4) avec ladite première partie de moule (21), au moins une desdites parties de moule (21, 22) ayant au moins un évidement (5) conçu pour recevoir au moins un insert (6) absorbant la pression, disposé à l'extérieur de la cavité de moule (3) et adjacent au plan de joint (4), ledit insert (6) ayant au moins un bord proximal, qui est le plus proche du plan de joint du dispositif de moulage, et un bord distal, qui est le plus éloigné du plan de joint du dispositif de moulage, ledit insert scellant ainsi ladite cavité de moule le long du plan de joint, **caractérisé en ce que** la dimension d'épaisseur dudit insert (6) absorbant la pression est plus petite au niveau d'un bord distal du plan de joint qu'au niveau d'un bord proximal du plan de joint, et l'au moins un insert (6) absorbant la pression comprenant un fluoropolymère synthétique déformable à la chaleur, tel que le polytétrafluoroéthylène (PTFE).

2. Dispositif de moulage selon la revendication 1, le bord proximal de l'au moins un insert (6) absorbant la pression étant conçu pour se dilater dans la cavité de moule (3) jusqu'à 0,5 mm par l'effet de l'augmentation de la température lors du moulage.

3. Dispositif de moulage selon l'une quelconque des revendications précédentes, ledit insert (6) absorbant la pression s'étendant entre 0,01 et mm à 20° Celsius au-delà de l'au moins un évidement (5) de sorte qu'une tension de pré-moulage soit établie lors de la transition des pièces de moulage (21, 22) d'un état ouvert à un état de moulage fermé.

4. Dispositif de moulage selon l'une quelconque des revendications précédentes, l'au moins un insert (6) absorbant la pression ayant une dureté Shore D dans la plage comprise entre 58 et 65 ou une dureté Shore A dans la plage comprise entre 40 et 80.

5. Dispositif de moulage selon l'une quelconque des revendications précédentes, ledit au moins un insert (6) absorbant la pression faisant partie intégrante d'au moins une partie de moule (21, 22).

6. Dispositif de moulage selon l'une quelconque des revendications 1 à 4, ledit au moins un insert (6) absorbant la pression étant fixé de manière détachable à ladite au moins une partie du moule.

7. Dispositif de moulage selon l'une quelconque des revendications précédentes, ledit au moins un insert (6) absorbant la pression étant réglable dans l'évidement (5) le long d'au moins un d'un axe x essentiellement parallèle à une dimension de longueur dudit insert d'absorption de pression, un axe y essentiellement parallèle à une dimension de largeur dudit insert d'absorption de pression, un axe z essentiellement parallèle à une dimension d'épaisseur dudit insert d'absorption de pression.

8. Dispositif de moulage selon la revendication 7, une cale (10) étant placée à côté de l'insert (6) absorbant la pression dans l'évidement (5).

9. Dispositif de moulage selon l'une quelconque des revendications précédentes, ledit dispositif de moulage (1) étant conçu pour mouler à une pression d'injection inférieure à 14 bars.

10. Procédé de fabrication d'un châssis ou cadre de fenêtre sans bavure, le procédé comprenant les étapes consistant à :
fournir un dispositif de moulage (1) conçu pour être utilisé dans un dispositif de moulage par injection et réaction selon l'une quelconque des revendications 1 à 9 comprenant :
deux parties de moule (21, 22),
au moins un insert (6) absorbant la pression dans au moins un évidement (5) dans au moins une des deux parties de moule (21, 22),
joindre les deux parties de moule (21, 22), définissant ainsi un plan de joint (4) et une cavité de moule (3) de sorte que l'insert (6) absorbant la pression soit adjacent à l'extérieur de la cavité de moule au niveau d'un plan de joint, et
injecter un matériau pouvant être traité par un moule à injection et réaction dans la cavité de moule.

11. Procédé selon la revendication 10, comprenant l'étape supplémentaire consistant à placer au moins une cale dans l'évidement (5) pour forcer l'insert d'absorption de pression le long d'au moins un axe x, y, z.

12. Procédé selon la revendication 11, la cale ayant au moins un côté incliné.

13. Procédé selon l'une quelconque des revendications 10 à 12, la pression d'injection appliquée au matériau pouvant être traité par moulage par injection et réaction pendant l'injection étant inférieure à 14 bars.
